# EUROPÄISCHE PATENTANMELDUNG

(11) **EP 1 537 976 A1**
(43) Veröffentlichungstag der Anmeldung: **08.06.2005**
(21) Anmeldenummer: 04024796.7
(22) Anmeldetag: 19.10.2004
(51) Int. Cl.: B29C 49/36, B29C 49/78, B29C 35/00, B29C 35/02, G05D 23/00

(54) **Verfahren und Vorrichtung zur Bearbeitung von Werkstücken**

(30) Priorität: 05.12.2003 DE 10357247
(71) Anmelder: SIG Technology Ltd., 8212 Neuhausen Rhine Falls (CH)
(72) Erfinder: Hasendonckx, Frank, 22159 Hamburg (DE); Seel, Oliver, 24558 Henstedt-Ulzburg (DE); Flügge, Torsten, 21039 Escheburg (DE)
(74) Vertreter: Klickow, Hans-Henning, Dr.-Ing.

(57) **Zusammenfassung**

Das Verfahren und die Vorrichtung dienen zur Bearbeitung von Werkstücken, die in eine Bearbeitungsstation (3) eingesetzt werden. Die Bearbeitungsstation (3) wird auf einem rotierenden Tragrad (25) bewegt. Auf dem Tragrad (25) wird mindestens ein Temperiermedium zur Temperierung mindestens eines Bereiches der Bearbeitungsstation verwendet. Die Temperatur des Temperiermediums wird durch einen Temperaturregler auf dem Tragrad (25) vorgegeben.

## Beschreibung

Die Erfindung betrifft ein Verfahren zur Bearbeitung von Werkstücken, bei dem die Werkstücke in eine Bearbeitungsstation eingesetzt werden, die auf einem rotierenden Tragrad bewegt wird und bei dem auf dem Tragrad mindestens ein Temperiermedium zur Temperierung mindestens eines Bereiches der Bearbeitungsstation verwendet wird.

Die Erfindung betrifft darüber hinaus eine Vorrichtung zur Bearbeitung von Werkstücken, die mindestens eine auf einem rotationsfähigen Tragrad angeordnete Bearbeitungsstation für die Werkstücke aufweist bei der auf dem Tragrad mindestens eine Temperiereinrichtung zur Versorgung der Bearbeitungsstation mit einem Temperiermedium angeordnet ist.

Die Bearbeitungsstation kann beispielsweise zur Blasformung von Behältern ausgebildet sein. Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei einer Vielzahl von Bearbeitungsvorgängen ist es erforderlich, die verwendeten Werkzeuge zu kühlen und/oder zu beheizen. Hierzu werden dem Tragrad entsprechende Temperiermedien über Drehkupplungen bzw. Drehverteiler zugeführt. Insbesondere bei einer erforderlichen Verwendung von Temperiermedien mit unterschiedlichen Temperaturen sind die verwendeten Drehverteiler als vergleichsweise komplexe und teure Bauelemente konstruiert, die bei einer größeren Anzahl von angeschlossenen Bearbeitungsstationen unter Berücksichtigung der erforderlichen Leitungsverbindungen auch einen erheblichen Bauraum einnehmen.

Aufgabe der vorliegenden Erfindung ist es, ein Verfahren der einleitend genannten Art derart zu verbessern, daß ein vereinfachter konstruktiver Aufbau unterstützt wird.

Diese Aufgabe wird erfindungsgemäß dadurch gelöst, daß die Temperatur des Temperiermediums durch einen Temperaturregler auf dem Tragrad vorgegeben wird.

Weitere Aufgabe der vorliegenden Erfindung ist es, eine Vorrichtung der einleitend genannten Art derart zu konstruieren, daß eine Betriebsmittelversorgung des Tragrades vereinfacht wird.

Diese Aufgabe wird erfindungsgemäß dadurch gelöst, daß auf dem Tragrad ein Temperaturregler für das Temperiermedium angeordnet ist.

Durch die Temperaturvorgabe für das Temperiermedium auf dem Tragrad wird eine separate Drehkupplung bzw. ein Drehverteiler für eine Zufuhr dieses Temperiermediums zum Tragrad vermieden. Gegebenenfalls verwendete Drehkupplungen oder Drehverteiler können hierdurch mit zumindest einer verringerten Anzahl von Übertragungskanälen ausgebildet. werden, daß sowohl die Komplexität dieser Bauelemente als auch ihr Preis erheblich reduziert werden.

Eine Temperaturerhöhung kann dadurch erfolgen, daß die Temperatur durch eine aktive Beheizung vorgegeben wird.

Zur Durchführung einer Temperaturabsenkung wird vorgeschlagen, daß die Temperatur durch eine aktive Kühlung vorgegeben wird.

Eine Temperatursteuerung in Abhänigkeit von einem dem Tragrad zugeführten Temperiermedium kann dadurch erfolgen, daß die Temperaturvorgabe unter Verwendung mindestens eines dem Tragrad zugeführten zweiten Temperiermediums durchgeführt wird.

Ein Energieübergang zwischen Temperiermedien unterschiedlicher Temperatur kann dadurch erfolgen, daß die Temperatur unter Verwendung mindestens eines Wärmetauschers vorgegeben wird.

Eine weitere Realisierungsmöglichkeit zur Temperaturvorgabe besteht darin, daß die Temperatur durch Mischung von mindestens zwei Temperiermedien unterschiedlicher Temperatur vorgegeben wird.

Möglichkeiten sowohl zur Temperaturerhöhung als auch zur Temperaturabsenkung werden dadurch bereitgestellt, daß die Temperatur unter Verwendung zweier dem Tragrad mit unterschiedlichen Temperaturen zugeführter Temperiermedien durchgeführt wird.

Eine typische Ausführungsform wird dadurch definiert, daß vom Tragrad mindestens zwei Bearbeitungsstationen transportiert werden.

Insbesondere ist daran gedacht, daß durch das Temperiermedium eine Temperaturvorgabe in mindestens einem Bereich einer Blasstation durchgeführt wird.

Gemäß einer weiteren Ausführungsvariante ist vorgesehen, daß eine Temperierung mindestens eines Teiles einer Blasform durchgeführt wird.

Ein Anwendungsgebiet mit besonders hohen Anforderungen an eine Temperatursteuerung besteht darin, daß die Temperaturvorgabe im Bereich einer Blasform zur Herstellung von heiß abfüllbaren Behältern durchgeführt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Prinzipdarstellung zur Veranschaulichung der Verwendung eines Wärmetauschers zur Temperaturvorgabe für das Temperiermittel, bei einer Abzweigung des Temperiermittels von einem zweiten Temperiermittelkreis,
- Fig. 6: eine weitere Anordnung, bei der ein geschlossener Temperiermittelkreis verwendet ist, bei dem zur Temperaturvorgabe für das Temperiermittel zwei Wärmetauscher verwendet sind,
- Fig. 7: eine Prinzipdarstellung zur Veranschaulichung der Verwendung eines zusätzlichen Heizelementes,
- Fig. 8: eine Prinzipdarstellung zur Veranschaulichung einer Temperaturvorgabe durch Mischung von Temperiermedien mit unterschiedlicher Temperatur und
- Fig. 9: ein weiteres Ausführungsbeispiel zur Verwendung eines geschlossenen Temperiermittelkreises.

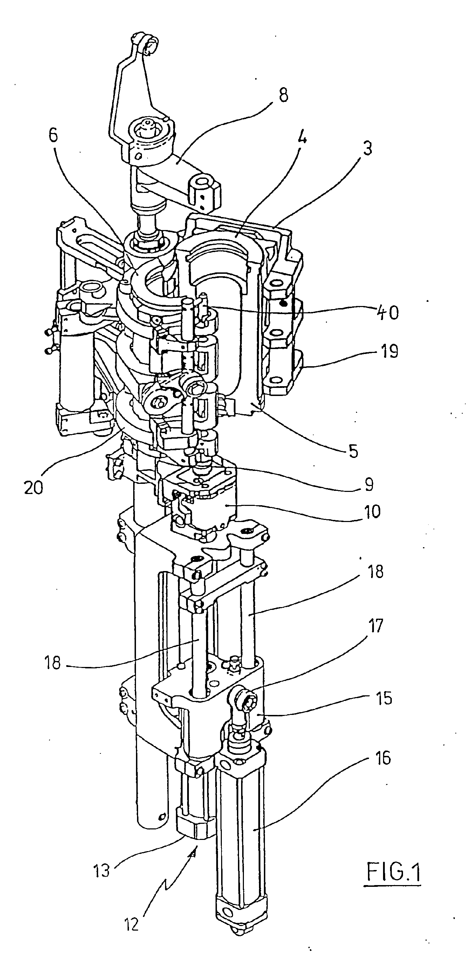

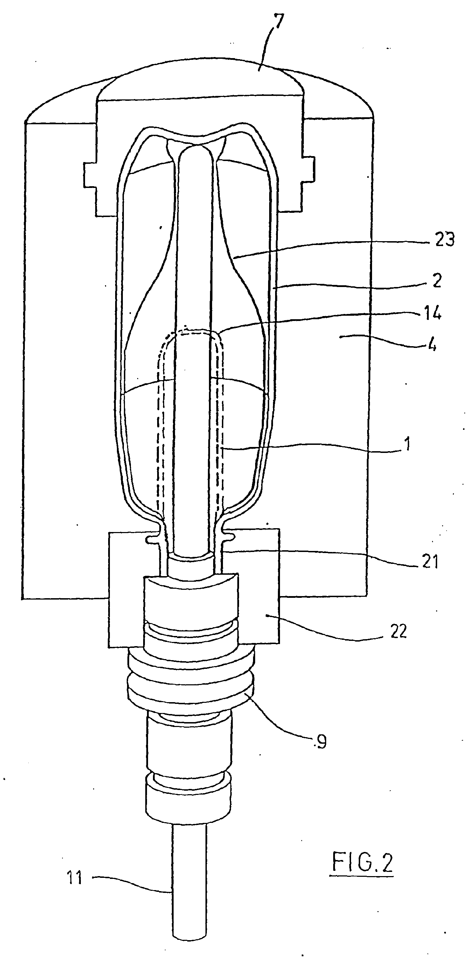

Ein Ausführungsbeispiel für eine Vorrichtung zur Bearbeitung von Werkstücken wird nachfolgend für eine Anwendung bei der blastechnischen Behälterformung beschrieben. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

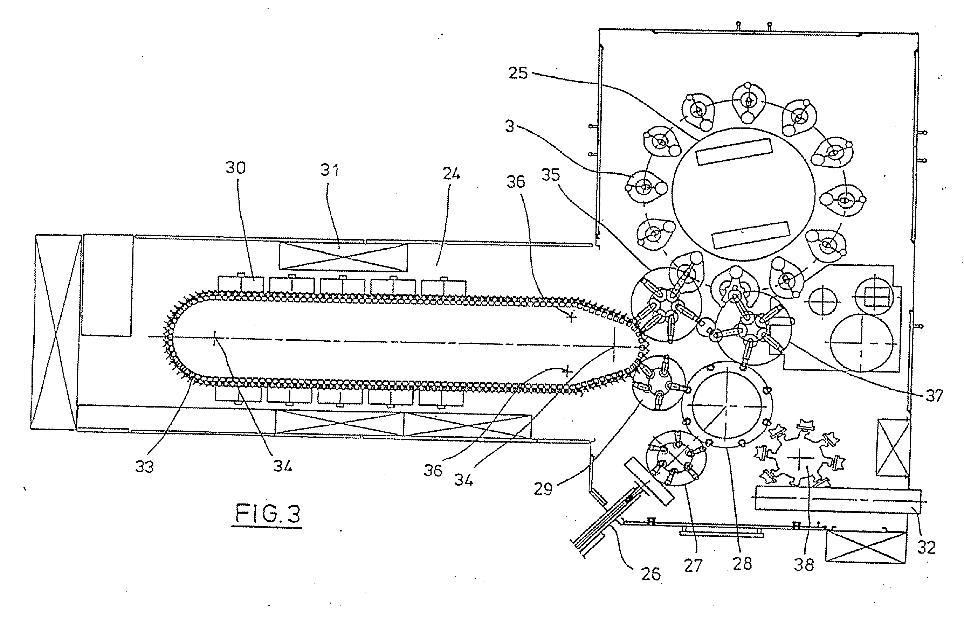

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

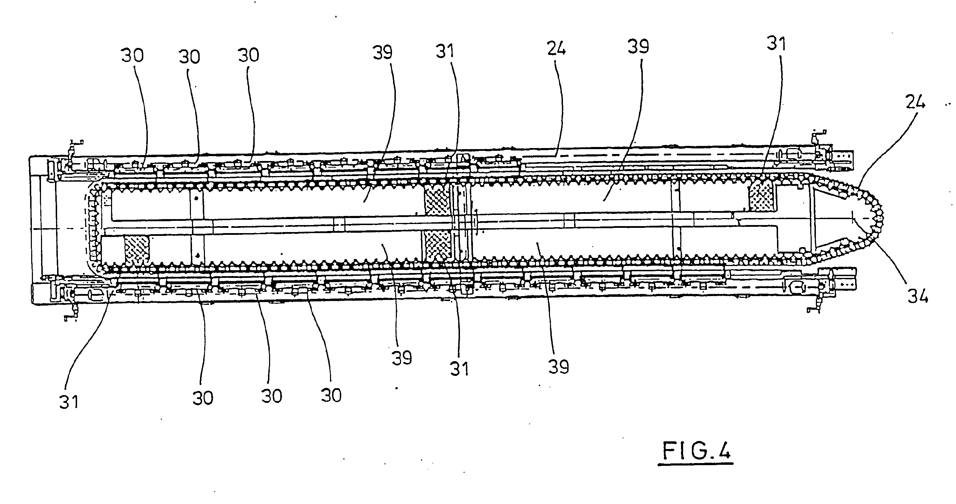

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungs-richtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

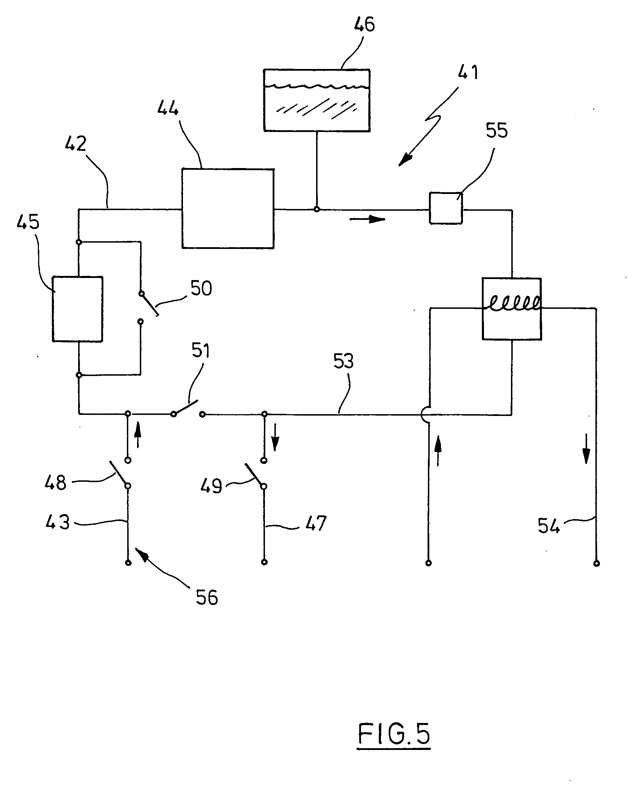

Fig. 5 zeigt schematisch eine im Bereich eines Tragrades angeordnete Temperiereinrichtung (41). Das Tragrad kann dabei als das Blasrad (25) ausgebildet sein und als Blasstation (3) konstruierte Bearbeitungsstationen für die Werkstücke haltern. Die Temperiereinrichtung (41) umfaßt Temperiermittelleitungen (42), in denen das Temperiermittel fließt. Beim dargestellten Ausführungsbeispiel wird das Temperiermittel aus einer Zuführleitung (43) entnommen und durch mindestens ein Bauteil (44) im Bereich der Bearbeitungsstation geleitet. Die Förderung des Temperiermittels wird von einer Pumpe (45) unterstützt. Über einen Speicher (46) kann sowohl ein Druckausgleich als auch eine Temperiermittelbevorratung erfolgen. Eine Ableitung des Temperiermittels kann über eine Rückleitung (47) erfolgen. Im Bereich der Zuführleitung (43) ist ein Zufuhrventil (48) und im Bereich der Rückleitung (47) ein Ableitungsventil (49) angeordnet. Die Pumpe (45) kann über ein Bypaßventil (50) überbrückt werden.

Über ein Steuerventil (51) kann die Temperiermittelleitung (42) zu einem geschlossenen Temperierkreis (52) geschaltet werden. In diesem Betriebszustand sind sowohl das Zufuhrventil (48) als auch das Ableitungsventil (49) in ihrer Sperrposition. Ein Wärmetauscher (53) wird vom Temperiermittel durchströmt und ist an einen zweiten Temperierkreis (54) angeschlossen. Eine zusätzliche Energieeinbringung kann über ein Heizelement (55) erfolgen. Bei einer entsprechenden Beschaltung der Vorrichtung gemäß Fig. 5 ist es somit möglich, über einen von der Zuführleitung (43) und der Rückleitung (47) teilweise bereitgestellten ersten Temperierkreis (56) das Temperiermittel in den Temperier-kreis (52) einzuleiten und die Temperaturvorgabe im wesent-lichen über den Wärmetauscher (53) vorzunehmen, der beispielsweise als Teil des zweiten Temperierkreises (54) ausgebildet ist. Die Temperiermedien der Temperierkreise (54, 56) können dem Tragrad über Drehkupplungen bzw. Drehverteiler zugeführt werden. Der Temperierkreis (52) wird ohne eigene separate Betriebsmittelversorgung auf dem Tragrad realisiert. Die gezeigte Anordnung kann somit unter Verwendung eines Zweikreisverteilers erfolgen, obwohl funktionell drei separate Temperierkreise bereitgestellt sind.

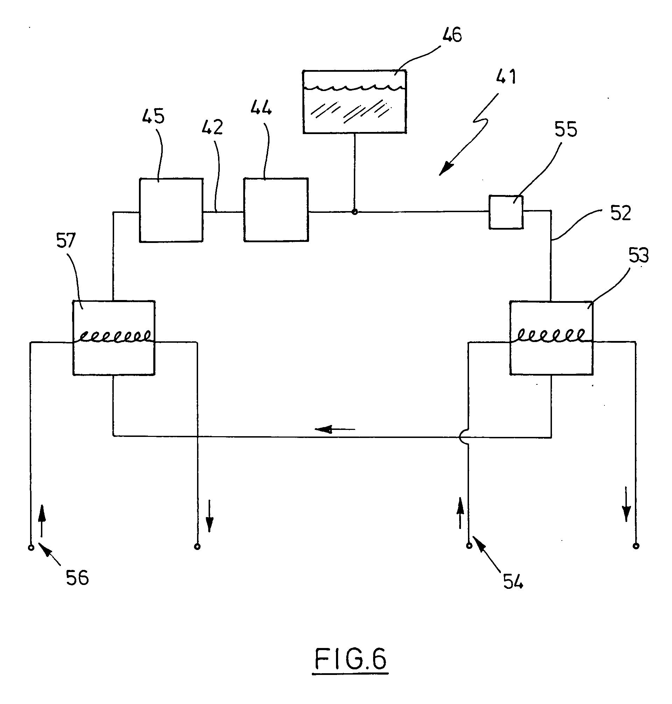

Fig. 6 zeigt eine gegenüber Fig. 5 abgewandelte Ausführungsform, bei der keine direkte Verbindung zwischen dem geschlossenen Temperierkreis (52) und den Temperierkreisen (54, 56) besteht. Zur Verbesserung der Temperaturregelung ist ein zweiter Wärmetauscher (57) verwendet, der beispielsweise Teil des ersten Temperierkreises (56) ist. Eine derartige Anordnung erweist sich insbesondere dann als vorteilhaft, wenn die Temperatur in einem der Temperierkreise (54, 56) höher und im anderen dieser Temperierkreise (54, 56) niedriger als im geschlossenen Temperierkreis (52) realisiert ist. Es kann dann sowohl eine aktive Kühlung als auch eine aktive Beheizung des geschlossenen Temperierkreises (52) erfolgen. Auch bei einer derartigen Ausführungsform kann ein zusätzliches Heizelement (55) oder gegebenenfalls auch ein entsprechendes zusätzliches Kühlelement verwendet werden.

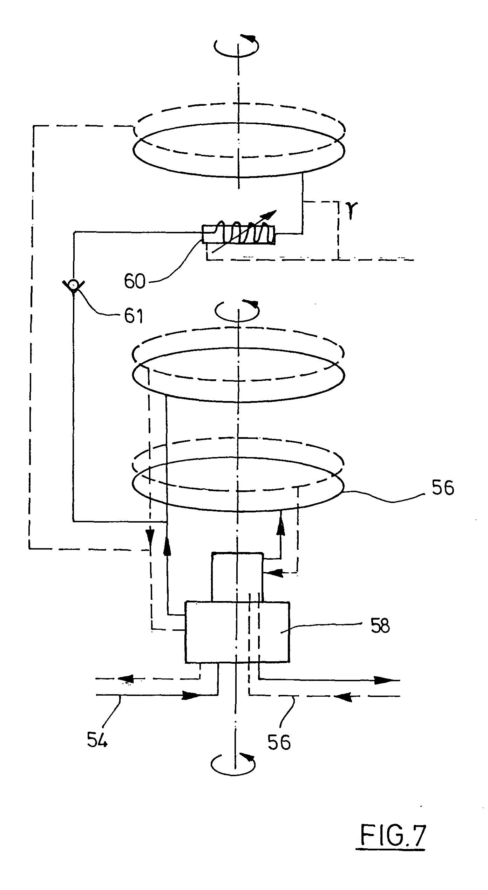

Fig. 7 zeigt eine Ausführungsform, bei der der erste Temperierkreis (56) sowie der zweite Temperierkreis (54) über einen Drehverteiler (58) an die im Bereich des Tragrades angeordneten Funktionskomponenten angeschlossen sind. Der Kühlkreislauf wird in zwei Einzelkreise aufgeteilt. Einer dieser Kreise wird mit derjenigen Temperatur betrieben, mit der das zugeordnete Temperiermedium in den Bereich des Tragrades geleitet wird. Der zweite Kreis wird auf dem Tragrad beispielsweise über einen Wärmetauscher (60) abweichend zur Temperatur des Kühlkreises temperiert. Eine Temperatursteuerung kann z.B. dadurch erfolgen, daß die Menge eines durch einen Bypaß geleiteten Temperiermittels in Abhängigkeit von einem Soll-Ist-Wertvergleich der Temperatur gesteuert wird. Statt des Wärmetauschers (60) kann auch ein Heiz- oder Kühlelement verwendet werden. Ein ungewollter Rückfluß wird durch ein Rückschlagventil (61) verhindert.

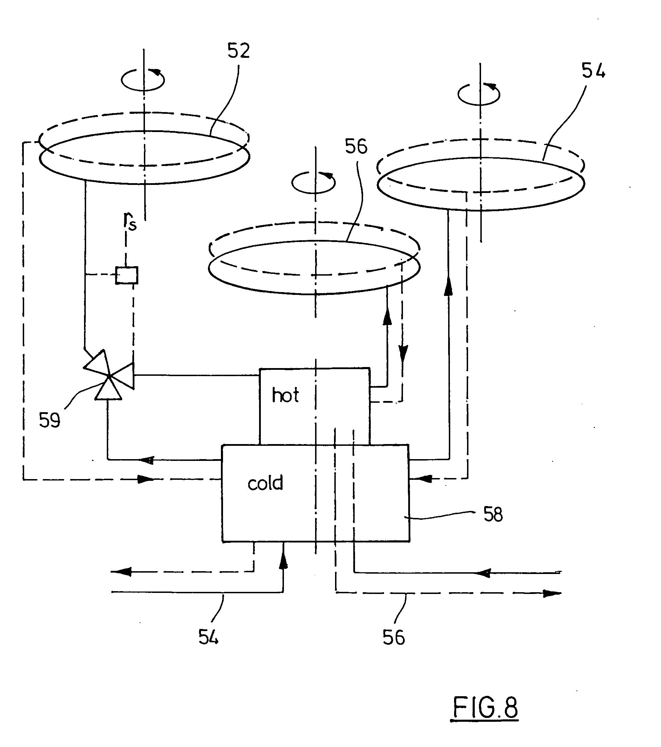

Fig. 8 zeigt eine Ausführungsvariante, bei der ebenfalls über einen Drehverteiler (58) ein erster und zweiter Temperierkreis (54, 56) in den Bereich des Tragrades geleitet wird. Über ein Dreiwegeventil (59) erfolgt eine entsprechende Temperaturvorgabe. Das Dreiwegeventil (59) mischt hierbei die Temperiermedien des ersten und zweiten Temperierkreises (54, 56) für den dritten Temperierkreis derart, daß die Zieltemperatur erreicht wird. Eine Rückführung des Temperiermediums aus dem dritten Temperierkreis erfolgt vorzugsweise in den Kühlkreis, da hier typischer Weise ein größeres Temperiermittelvolumen sowie eine größere Temperierleistung als im Heizkreis vorliegt. Darüber hinaus sind hier häufig die Anforderungen an zulässige Temperaturschwankungen geringer.

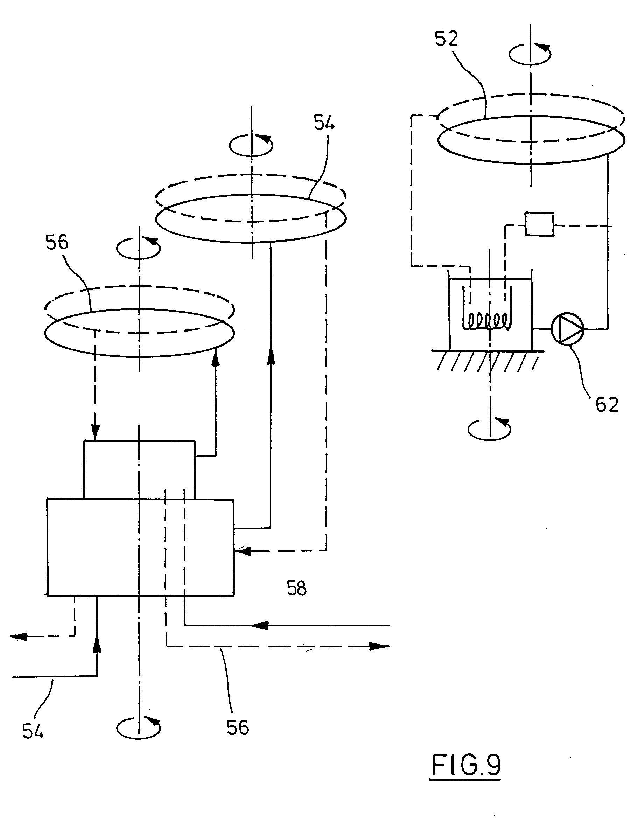

Gemäß der Ausführungsform in Fig. 9 sind wiederum ein erster und zweiter Temperierkreis (54, 56) über einen Drehverteiler (58) an das Tragrad angeschlossen. Ein weiterer Temperierkreis wird völlig unabhängig von den ersten beiden Temperierkreisen (54, 56) hinsichtlich seiner Temperatur geregelt. Eine aktive Temperatureinstellung kann beispielsweise über ein elektrisches Heizelement erfolgen, einsetzbar sind aber auch gesteuerte Kühlelemente. Als gesteuerte Kühlelemente können beispielsweise Peltier-Elemente eingesetzt werden. Verwendbar sind aber auch andere vorzugsweise elektrisch steuerbare Kühlgeräte. Ein derartiger unabhängiger Temperierkreis wird mit einer eigenen Pumpe (62) ausgestattet. Die Ausführungsformen nach Fig. 7 und Fig. 8 können ohne separate Pumpen betrieben werden.

Bei einer Verwendung von drei Temperiermittelkreisen für die Blasformung von Behältern wird der erste Temperierkreis (56) beispielsweise als ein Kühlkreis mit einer Temperatur von 10 ° C realisiert. Der zweite Temperierkreis (54) wird als ein Heizkreis mit einer Temperiermitteltemperatur mit etwa 135 ° C realisiert. Die Temperatur für den dritten auf dem Tragrad realisierten und temperaturgesteuerten Kreis kann etwa 80 ° C betragen.

## Patentansprüche

1. Verfahren zur Bearbeitung von Werkstücken, bei dem die Werkstücke in eine Bearbeitungsstation eingesetzt werden, die auf einem rotierenden Tragrad bewegt wird und bei dem auf dem Tragrad ein Temperiermedium zur Temperierung mindestens eines Bereiches der Bearbeitungsstation verwendet wird, **dadurch gekennzeichnet, daß** die Temperatur des Temperiermediums durch einen Temperaturregler auf dem Tragrad vorgegeben wird.

2. Verfahren nach Anspruch 1, **dadurch gekennzeichnet, daß** die Temperatur durch eine aktive Beheizung vorgegeben wird.

3. Verfahren nach Anspruch 1 oder 2, **dadurch gekennzeichnet, daß** die Temperatur durch eine aktive Kühlung vorgegeben wird.

4. Verfahren nach einem der Ansprüche 1 bis 3, **dadurch gekennzeichnet, daß** die Temperaturvorgabe unter Verwendung mindestens eines dem Tragrad zugeführten zweiten Temperiermediums durchgeführt wird.

5. Verfahren nach einem der Ansprüche 1 bis 4, **dadurch gekennzeichnet, daß** die Temperatur unter Verwendung mindestens eines Wärmetauschers auf dem Tragrad vorgegeben wird.

6. Verfahren nach einem der Ansprüche 1 bis 4, **dadurch gekennzeichnet, daß** die Temperatur auf dem Tragrad durch Mischung von mindestens zwei Temperiermedien unterschiedlicher Temperatur vorgegeben wird.

7. Verfahren nach einem der Ansprüche 1 bis 6, **dadurch gekennzeichnet, daß** die Temperatur unter Verwendung zweier dem Tragrad mit unterschiedlichen Temperaturen zugeführter Temperiermedien durchgeführt wird.

8. Verfahren nach einem der Ansprüche 1 bis 7, **dadurch gekennzeichnet, daß** vom Tragrad mindestens zwei Bearbeitungsstationen transportiert werden.

9. Verfahren nach einem der Ansprüche 1 bis 8, **dadurch gekennzeichnet, daß** durch das Temperiermedium eine Temperaturvorgabe in mindestens einem Bereich einer Blasstation durchgeführt wird.

10. Verfahren nach Anspruch 9, **dadurch gekennzeichnet, daß** eine Temperierung mindestens eines Teiles einer Blasform durchgeführt wird.

11. Verfahren nach Anspruch 9 oder 10, **dadurch gekennzeichnet, daß** die Temperaturvorgabe im Bereich einer Blasform zur Herstellung von heiß abfüllbaren Behältern durchgeführt wird.

12. Vorrichtung zur Bearbeitung von Werkstücken, die mindestens eine auf einem rotationsfähigen Tragrad angeordnete Bearbeitungsstation für die Werkstücke aufweist und bei der auf dem Tragrad mindestens eine Temperiereinrichtung zur Versorgung der Bearbeitungsstation mit einem Temperiermedium angeordnet ist, **dadurch gekennzeichnet, daß** auf dem Tragrad ein Temperaturregler für das Temperiermedium angeordnet ist.

13. Vorrichtung nach Anspruch 12, **dadurch gekennzeichnet, daß** der Temperaturregler an mindestens ein Heizelement (55) angeschlossen ist.

14. Vorrichtung nach Anspruch 12 oder 13, **dadurch gekennzeichnet, daß** der Temperaturregler an mindestens einem Kühlelement angeschlossen ist.

15. Vorrichtung nach einem der Ansprüche 12 bis 14, **dadurch gekennzeichnet, daß** der Temperaturregler an mindestens ein externes Temperiermedium angeschlossen ist.

16. Vorrichtung nach einem der Ansprüche 12 bis 15, **dadurch gekennzeichnet, daß** der Temperaturregler mindestens einen Wärmetauscher aufweist.

17. Vorrichtung nach einem der Ansprüche 12 bis 16, **dadurch gekennzeichnet, daß** der Temperaturregler mindestens eine Mischeinrichtung für zwei Temperiermedien unterschiedlicher Temperatur aufweist.

18. Vorrichtung nach einem der Ansprüche 12 bis 17, **dadurch gekennzeichnet, daß** der Temperaturregler an zwei externe Temperiermedien unterschiedlicher Temperaturen angeschlossen ist.

19. Vorrichtung nach einem der Ansprüche 12 bis 18. **dadurch gekennzeichnet, daß** auf dem Tragrad mindestens zwei Bearbeitungsstationen angeordnet sind.

20. Vorrichtung nach einem der Ansprüche 12 bis 19, **dadurch gekennzeichnet, daß** die Bearbeitungsstation als eine Blasstation (3) ausgebildet ist.

21. Vorrichtung nach einem der Ansprüche 12 bis 20, **dadurch gekennzeichnet, daß** das Temperiermedium an eine Blasform (4) der Blasstation (3) angeschlossen ist.

22. Vorrichtung nach Anspruch 21, **dadurch gekennzeichnet, daß** die Blasform (4) zur Herstellung von heiß abfüllbaren Behältern ausgebildet ist.
